# FASCICULE DE BREVET EUROPEEN

(11) **EP 0 424 230 B1**
(45) Date de publication et mention de la délivrance du brevet: **28.07.1993**
(21) Numéro de dépôt: 90402872.7
(22) Date de dépôt: 15.10.1990
(51) Int. Cl.: B25J 19/00, B23K 11/31, B23K 11/36, H01H 1/24, H01H 3/24

(54) **Robot perfectionné**
Verbesserter Roboter
Improved robot

(30) Priorité: 16.10.1989 FR 8913497
(43) Date de publication de la demande: 24.04.1991
(73) Titulaire: AUTOMOBILES PEUGEOT, 75116 Paris (FR); AUTOMOBILES CITROEN, 92200 Neuilly-sur-Seine (FR)
(72) Inventeur: Platini, Jean-Pierre, F-91640 Briis sous Forges (FR)
(74) Mandataire: Durand, Yves Armand Louis

(56) Documents cités:
- EP-A- 0 021 306
- EP-A- 0 288 744
- DE-A- 2 215 957
- FR-A- 412 963
- FR-A- 1 246 296
- FR-A- 2 391 025
- US-A- 3 534 198

## Description

La présente invention a essentiellement pour objet un robot perfectionné.

On sait que les robots, d'une manière générale, comprennent un certain nombre de bras reliés entre eux par des articulations et des circuits aptes à transmettre à un outil, tel que par exemple une pince de soudage portée par le dernier bras du robot, un courant électrique d'alimentation et un ou plusieurs fluides.

Toutefois, le courant et les fluides nécessaires pour assurer le fonctionnement d'une pince de soudage par points par exemple passent généralement dans un faisceau situé à l'extérieur de la structure du robot. Il est donc nécessaire que ce faisceau forme des boucles susceptibles d'absorber les débattements des bras du robot ou lors de leurs mouvements relatifs.

De telles boucles sont non seulement encombrantes et gênantes, mais peuvent provoquer des usures résultant de frottements, entre autres contre les pièces à souder. En outre, il est difficile d'optimiser la programmation des points de soudure.

Une solution alternative est connue du document EP-A- 0 021 306 sur lequel se fonde le préamble de la revendication 1.

Aussi, la présente invention a pour but de remédier à ces inconvénients en proposant un robot perfectionné possédant une fiabilité accrue et une programmation de poste qui peut être optimisée plus rapidement, par rapport aux robots antérieurement connus.

A cet effet, l'invention a pour objet un robot comprenant un certain nombre de bras reliés entre eux par des articulations et des circuits aptes à transmettre à un outil, tel qu'une pince de soudage portée par le dernier bras du robot, un courant électrique d'alimentation et au moins un fluide, ce robot étant essentiellement caractérisé en ce que lesdits circuits d'alimentation en courant et en fluide sont incorporés dans au moins, certains bras constituant la partie supérieure du robot.

En d'autres termes, les circuits de courant et de fluide sont en quelque sorte intégrés aux bras supérieurs du robot.

Suivant une autre caractéristique du robot objet de l'invention, au moins l'une des articulations comporte des moyens pour interrompre le passage du courant d'un bras au suivant lorsque l'on désire faire tourner un bras par rapport à l'autre, et pour permettre le passage du courant lorsque la position angulaire relative désirée des deux bras est atteinte.

Les moyens pour interrompre ou permettre le passage du courant comprennent, suivant un exemple de réalisation : une première pièce annulaire reliée à l'un des bras de façon mobile en translation par rapport à ce bras ; une deuxième pièce annulaire solidaire de l'autre bras ; des moyens de rappel sollicitant constamment les deux pièces en position écartée l'une de l'autre ; des moyens pour plaquer les deux pièces l'une contre l'autre ; et des moyens interposés entre les deux pièces pour assurer le passage du courant entre elles lorsqu'elles sont plaquées l'une contre l'autre.

On précisera ici que les moyens pour assurer le passage du courant comprennent au moins un ressort qui est logé dans une gorge ménagée sur une face desdites pièces ou dans un pièce intermédiaire fixée de façon amovible sur cette face, et dont les spires sensiblement perpendiculaires aux faces en contact des pièces, peuvent être écrasées par une face de l'autre pièce pour ainsi assurer des contacts électriques ponctuels et multiples.

Quant aux moyens pour plaquer les deux pièces l'une contre l'autre, ils peuvent être constitués par une chambre annulaire communiquant avec une source d'air comprimée et fermée par un joint à lèvres apte à pousser l'une des deux pièces contre l'autre.

Suivant une autre caractéristique de l'invention, les deux pièces annulaires précitées se composent chacune de deux demi-pièces électriquement isolées et dans lesquelles circule un fluide réfrigérant tel que de l'eau.

Suivant un autre mode de réalisation, les moyens pour interrompre ou permettre le passage du courant comprennent : au moins une pièce de connexion possédant une première face et une deuxième face pouvant être respectivement appliquées sur des faces correspondantes de deux bras adjacents ; des moyens de rappel tendant à éloigner ladite pièce de connexion des deux bras ; des moyens pour appliquer la pièce de connexion sur lesdites faces des deux bras, et des moyens pour assurer le passage du courant d'un bras à l'autre lorsque ladite pièce de connexion est plaquée sur les bras.

On précisera que là encore, les moyens pour assurer le passage du courant comprennent des ressorts hélicoïdaux qui sont logés dans des gorges ménagées sur les faces de la pièce de connexion électriquement conductrice, et dont les spires sont sensiblement perpendiculaires aux faces de contact des deux bras adjacents avec les faces de la pièce de connexion.

Cette pièce de connexion se compose de préférence de deux pièces concentriques correspondant aux deux pôles du courant et actionnées par un vérin.

Selon encore une autre caractéristique de l'invention, la pièce de connexion est agencée à la manière d'un coin entre les deux bras.

Suivant encore une autre caractéristique, chaque pièce concentrique précitée et son vérin associé présentent en coupe axiale, la forme générale d'un Y renversé dont les deux branches obliques constituent une pièce concentrique proprement dite, et dont la branche verticale constitue l'axe de poussée du vérin.

On précisera encore que l'une des pièces concentriques porte une tige solidaire d'un piston monté coulissant dans une chambre reliée à une source de pression, ladite tige traversant axialement et à coulissement un deuxième piston solidaire de l'autre pièce concentrique et monté coulissant dans une deuxième chambre raccordée à ladite source de pression.

Mais d'autres caractéristiques et avantages de la présente invention apparaîtront mieux dans la description détaillée qui suit et se réfère aux dessins annexés, donnés uniquement à titre d'exemple, et dans lesquels :

La figure 1 est une vue schématique en élévation d'un robot perfectionné selon cette invention.

La figure 2 est une vue en coupe axiale d'un contact électrique tournant prévu entre deux bras du robot, ce contact étant représenté en position de non passage du courant, c'est-à-dire dans une position permettant une rotation relative des deux bras.

La figure 3 est une vue identique à La figure 2 mais montrant le contact électrique tournant en position de passage du courant.

La figure 4 est une demi-vue, en coupe axiale, d'un autre mode de réalisation de contact électrique tournant.

La figure 5 est une vue en coupe axiale de deux bras du robot électriquement reliés par une pièce de connexion et comportant des passages pour plusieurs fluides d'un bras à l'autre ; et

La figure 6 est une vue agrandie en coupe axiale de la pièce de connexion précitée.

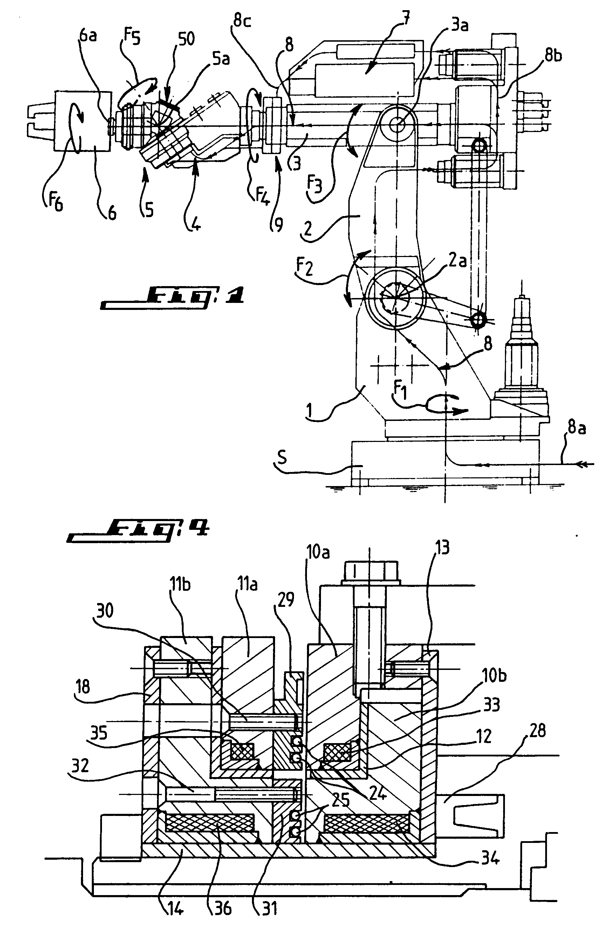

En se reportant à la figure 1, on voit un robot de soudage qui, suivant l'exemple de réalisation représenté, comprend six bras reliés entre eux par des articulations, étant entendu qu'on pourrait parfaitement appliquer les principes de l'invention à un robot comprenant moins ou plus de six bras ou de six axes de rotation autour desquels ces bras peuvent tourner.

Plus précisément, le robot comprend un socle S sur lequel est monté tournant autour d'un axe vertical et suivant la flèche F1 un premier bras 1. Sur ce premier bras est monté articulé en 2a un deuxième bras 2 qui peut tourner par rapport au bras 1 suivant la flèche F2. Sur le bras 2 est monté articulé en 3a un troisième bras 3 qui peut tourner par rapport au bras 2 suivant la flèche F3. Un quatrième bras 4 est monté articulé sur le bras 3 de façon à pouvoir tourner par rapport à celui-ci suivant la flèche F4. Un cinquième bras 5 est monté articulé en 5a sur le bras 4 de façon à pouvoir tourner par rapport à celui-ci autour d'un axe oblique et suivant la flèche F5. Enfin, un sixième bras 6 portant une pince de soudage est monté articulé en 6a sur le bras 5 de façon à pouvoir tourner par rapport à celui-ci suivant la flèche F6.

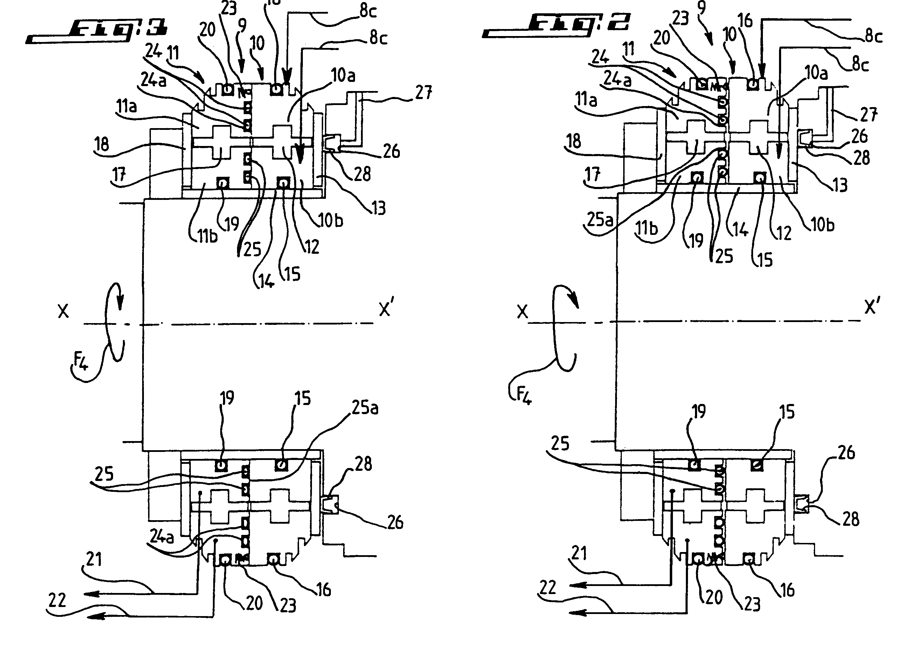

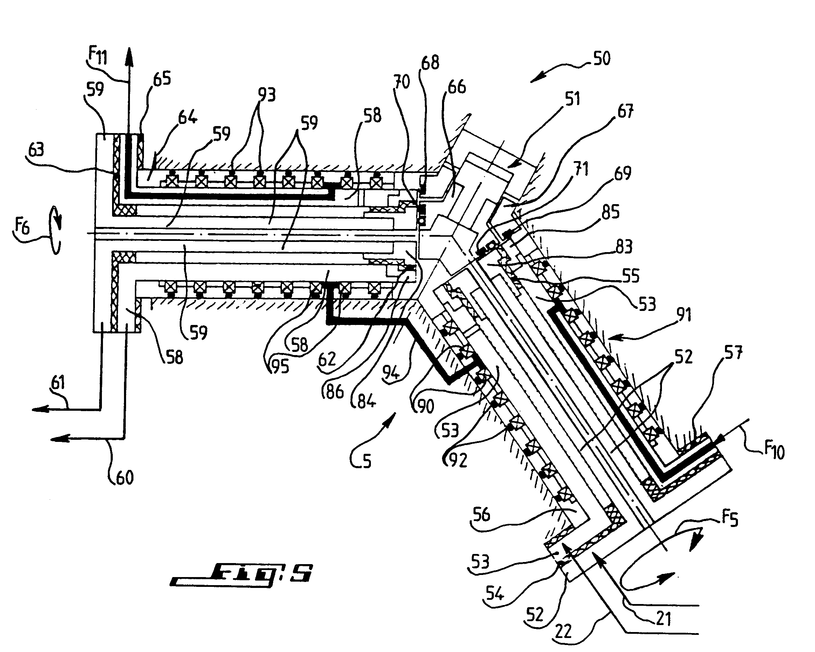

On a montré schématiquement en 7 un transformateur monté au-dessus de l'un 3 des bras supérieurs 3, 4, 5 et 6 du robot, et dont le primaire est alimenté par le secteur tandis que le secondaire de ce transformation est raccordé à la pince de soudage. A cet égard on a montré schématiquement en 8 sur la figure 1 le trajet suivi par le courant et les fluides (air comprimé et eau essentiellement) parvenant à la pince, l'alimentation se faisant en 8a. Plus précisément, on voit en 8b le trajet suivi par le courant et parvenant au primaire du transformateur 7, dont le secondaire 8c est raccordé à des moyens 9 formant un contact électrique tournant qui sera décrit ci-après en se reportant aux figures 2 et 3 et qui est interposé, dans l'exemple de réalisation représenté, entre les bras 3 et 4.

On observera tout d'abord que le contact électrique tournant 9 qui va être décrit permet l'interruption du passage du courant parvenant à la pince lorsqu'on désire faire tourner le bras 4 par rapport au bras 3, et permet le passage du courant lorsque la position relative désirée des bras 3 et 4 est atteinte.

On observera encore que, suivant une caractéristique essentielle de l'invention, les circuits d'alimentation en courant et en fluide sont incorporés dans les bras 3, 4, 5 et 6 constituant la partie supérieure du robot, comme on le voit bien sur la figure 1.

Comme il apparaît clairement sur les figures 2 et 3, le contact électrique tournant 9 se compose essentiellement de deux pièces annulaires accolées 10, 11, chacune de ces pièces se composant de deux demi-pièces concentriques 10a, 10b et 11a, 11b respectivement.

Les deux demi-pièces 10a, 10b qui sont raccordées respectivement aux deux pôles du secondaire 8c du transformateur 7 sont isolées l'une par rapport à l'autre par un élément 12 et par rapport au robot au moyen de pièces 13 et 14. En outre, chacune de ces demi-pièces 10a, 10b est refroidie par une circulation d'eau passant dans des conduites montrées en 15 et 16.

Le groupe de demi-pièces 10a, 10b est monté mobile en rotation sur le bras 3 (figure 1) mais est aussi mobile en translation par rapport à ce bras pour pouvoir être plaqué contre le groupe de demi-pièces concentriques 11a, 11b.

Ces demi-pièces 11a, 11b sont isolées électriquement l'une par rapport a l'autre par un élément 17 et par rapport au robot par la pièce 14 et une pièce 18. Chacune de ces demi-pièces peut être refroidie par une circulation d'eau passant dans des conduites visibles en 19 et 20. On a montré en 21 et 22 la sortie du courant secondaire du transformateur, laquelle sortie pourra alimenter la pince de soudage via un autre moyen 50 qui sera décrit en détail plus loin et qui est interposé entre les bras 4 et 6.

Revenant au contact électrique tournant 9 visible sur les figures 2 et 3, on voit que le groupe 11 de demi-pièces 11a, 11b et le groupe 10 de demi-pièces 10a, 10b sont constamment sollicités en position écartée l'un de l'autre par des ressorts avec bille 23 logés par exemple dans les demi-pièces 11a et 11b.

On a montré en 24 et 25 des ressorts logés dans une gorge 24, 25a ménagée sur une face des demi-pièces 11a, 11b en vis-à-vis d'une face des demi-pièces 10a, 10b. Les spires des ressorts 24, 25 sont sensiblement perpendiculaires aux faces en regard des pièces 10a, 11a et 10b, 11b et ces spires peuvent être écrasées par rapprochement et contact de ces pièces pour ainsi réaliser des contacts électriques ponctuels et multiples permettant le passage du courant des pièces 10a, 10b vers les pièces 11a, 11b.

Des moyens sont prévus pour plaquer les deux groupes 10, 11 de demi-pièces l'un contre l'autre, et sont essentiellement constitués par une chambre annulaire 26 communiquant avec une source d'air comprimé 27 et fermée par un joint à lèvres 28 qui peut être déplacé et/ou déformé sous l'effet de la pression de l'air.

Mais, pour une meilleure compréhension de l'invention, on expliquera ci-après brièvement le fonctionnement du contact électrique tournant 9 qui vient d'être décrit.

Sur la figure 2, on voit que les deux groupes 10, 11 de demi-pièces 10a, 10b et 11a, 11b respectivement sont écartés l'un de l'autre par l'action des ressorts 23. Dès lors, le courant de soudage ne passe pas, et le mouvement du robot peut se produire, c'est-à-dire que le bras 4 peut tourner autour de l'axe X-X' suivant la flèche F4 par rapport au bras 3.

Lorsque la position de soudage désirée est atteinte, et que les bras du robot doivent donc être maintenus dans cette position, le groupe 10 de demi-pièces 10a, 10b est plaqué contre le groupe 11 de demi-pièces 11a et 11b par action de l'air comprimé qui déplace le joint 28 à deux lèvres, comme on le voit bien sur la figure 3. On voit bien sur cette figure que les deux groupes 10 et 11 de demi-pièces sont en contact par leurs faces en regard. Plus précisément, la pièce 10a par laquelle arrive le courant du premier pôle du secondaire 8c du transformateur 7 vient en appui sur et écrase les ressorts de contact 24 solidaires de la pièce 11a. De même, la pièce 10b par laquelle arrive le courant du deuxième pôle du secondaire 8c du transformateur 7 vient en appui sur et écrase les ressorts de contact 25 solidaires de la pièce 11b.

Il en résulte que le courant secondaire traverse l'ensemble 9 et peut sortir en 21 et 22 pour alimenter la pince de soudage via l'autre contact électrique 50 entre les bras 4 et 6.

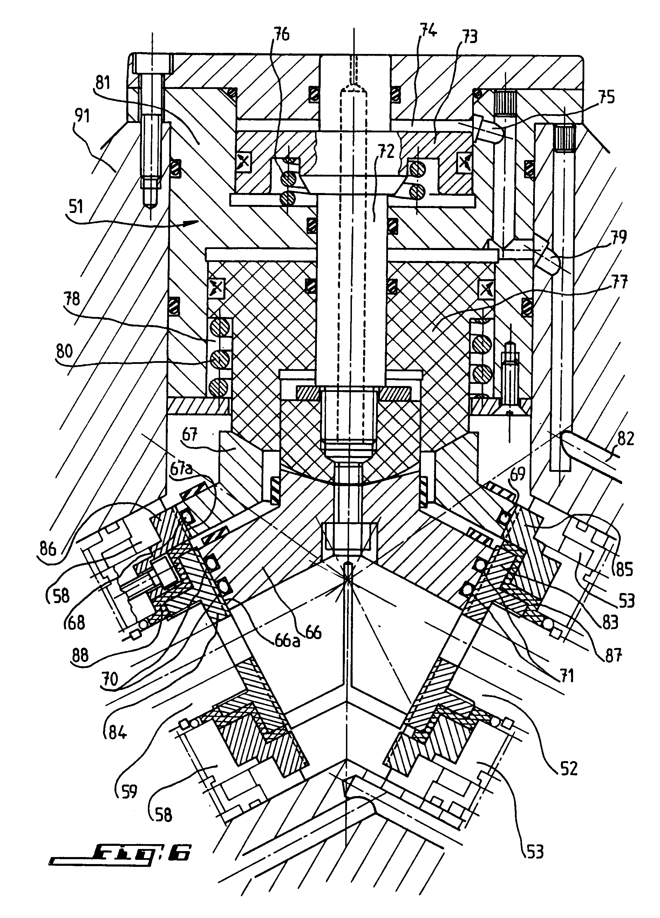

Avant de décrire cet autre contact, on se reportera tout d'abord à la figure 4 qui représente une variante de montage des ressorts 24 et 25.

Selon cette variante, les ressorts en question ne sont plus montés directement dans des gorges des demi-pièces 11a, 11b. Plus précisément, les ressorts 24 sont montés dans deux demi-pièces 29 solidaires de la pièce 11a par un ensemble de vis 30. Et les ressorts 25 sont montés dans deux demi-pièces 31 solidaires de la pièce 11b par des vis 32. Les conduites de circulation d'eau représentées sur les figures 2 et 3 sont ici remplacées par des conduites de circulation internes aux pièces 10a, 10b, 11a et 11b, qui sont repérées sur la figure 4 en 33, 34, 35 et 36.

Il est à noter que la variante de la figure 4 permet une interchangeabilité plus rapide des ressorts 24 et 25, ainsi qu'un refroidissement très fiable de l'ensemble formant contact apparaissant sur ladite figure 4.

Le moyen 50 formant contact électrique entre les bras 4 et 6 du robot sera maintenant décrit en se reportant aux figures 5 et 6.

On observera tout d'abord que cet ensemble possède deux fonctions principales, à savoir : amenée du courant des deux pôles du secondaire du transformateur 7 via le contact tournant 9 précédemment décrit (où le courant secondaire entre en 8c et sort en 21, 22), vers les deux pôles de la pince à souder sur le dernier bras 6 ; et amenée des fluides en provenance du bras 3 du robot vers ladite pince de soudage, ces fluides étant, suivant l'exemple de réalisation considéré, constitués par de l'eau circulant suivant deux pistes pour l'aller et le retour, et par de l'air comprimé circulant suivant cinq pistes.

Comme on le voit sur la figure 5, le moyen 50 se compose essentiellement : d'un premier groupe de pièces 52, 53 solidaire du bras 4 ; d'un deuxième groupe de pièces 58, 59 solidaire du bras 6, pouvant tourner avec ce bras suivant la flèche F6, et visible à l'horizontale sur la partie gauche de la figure 5 ; et d'une pièce de connexion 51 montrée à plus grande échelle sur la figure 6 et pouvant assurer soit le passage du courant électrique entre les deux groupes de pièces appartenant aux bras 4 et 6, soit l'interruption du passage du courant pour ainsi permettre la rotation de l'un des bras par rapport à l'autre.

Il faut préciser ici que le bras 5 du robot est constitué par une pièce tubulaire coudée 91 à l'intérieur de laquelle sont disposés d'une part le groupe de pièces 52, 53 solidaire du bras 4 et d'autre part le groupe de pièces 58, 59 solidaire du bras 6.

Le premier groupe de pièces solidaire du bras 4 comprend une pièce 53 extérieurement concentrique à la pièce 52, et par ces deux pièces 52, 53 arrive respectivement le courant 21, 22 des deux pôles du secondaire du transformateur. Les deux pièces 52, 53, sont isolées l'une par rapport à l'autre par des éléments isolants 54 et 55, et par rapport au bras 5 du robot, par un ensemble de pièces 56 et une pièce 57.

Le deuxième groupe de pièces solidaire du bras 6 comporte lui aussi deux pièces concentriques 58 et 59 par lesquelles sort respectivement en 60 et 61 le courant secondaire des deux pôles du courant secondaire provenant du transformateur 7, et devant parvenir au bras 6 portant la pince de soudage. Les deux pièces 58 et 59 sont isolées l'une par rapport à l'autre par des éléments isolants 62 et 63 et par rapport au bras 5 du robot, par un groupe de pièces 64 et une pièce 65.

La pièce de connexion 51 est, comme on le voit bien sur la figure 5, interposée à la manière d'un coin entre les deux groupes de pièces décrits ci-dessus.

Comme on le voit mieux sur la figure 6, la pièce de connexion 51 se compose de deux pièces concentriques 66 et 67, la pièce 66 étant en quelque sorte montée à l'intérieur de la pièce 67. Ces deux pièces sont électriquement isolées l'une par rapport à l'autre et sont équipées sur leurs faces extérieures 66a, 67a de ressorts hélicoïdaux 68 et 69 pour la pièce 67, et 70 et 71 pour la pièce 66. Tous ces ressorts hélicoïdaux fonctionnent comme décrit précédemment à propos du contact électrique tournant 9 illustré sur les figures 2 et 3. Comme on le voit bien sur la figure 6, tous ces ressorts sont logés dans des gorges pratiquées dans les faces extérieures 66a, 67a des pièces concentriques 66, 67 respectivement.

Ces pièces concentriques sont actionnées chacune par un vérin pneumatique à simple effet qui sera décrit maintenant en détail en se reportant plus particulièrement à la figure 6.

On remarquera tout d'abord, comme on le voit bien sur la figure 6, que chaque pièce concentrique 66, 67 présente en coupe axiale, la forme générale d'un Y renversé dont les deux branches obliques constituent la pièce concentrique proprement dite et dont la branche verticale constitue l'axe de poussée du vérin.

A la pièce 66 est associée une tige 72 solidaire d'un piston 73 monté coulissant dans une chambre 74 reliée à une source de pression (non représentée) par un conduit 75. Le piston 73 est constamment sollicité par un ressort 76 de façon à éloigner la pièce 66 de sa position de contact, par sa face extérieure 66a, avec les deux groupes de pièces solidaires des bras 4 et 6.

La tige 72 est montée axialement et à coulissement étanche au travers d'un deuxième piston 77 associé à la pièce 67. Ce deuxième piston 77 est lui-même monté coulissant dans une deuxième chambre 78 communiquant avec la source de pression précitée par un conduit 79. En outre, ce deuxième piston, comme le premier piston 73, est constamment sollicité par un ressort 80 tendant à éloigner la pièce 67, par sa face extérieure 67a, de la position de contact avec les deux groupes de pièces solidaires des bras 4 et 6.

L'ensemble de pièces ci-dessus peut être intégré dans un corps 81 faisant partie du poignet du robot.

Pour une meilleure compréhension de l'invention, on expliquera ci-après le fonctionnement du système décrit ci-dessus.

Sur la figure 5, la pièce 51 assurant la connexion électrique est écartée des deux groupes de pièces solidaires des bras 4 et 6, c'est-à-dire est en position haute, grâce aux ressorts 76 et 80 sollicitant vers le haut les pièces concentriques 66 et 67. C'est-à-dire que le courant de soudage ne passe pas et que l'on peut régler les bras 4, 5, 6 du robot l'un par rapport à l'autre pour amener la pince de soudage à la position requise.

Lorsque le robot est en position correcte de soudage, de l'air comprimé est envoyé via le conduit 82 aux conduites 75 et 79, de sorte que les pistons 73 et 77 sont actionnés vers le bas (figure 6), ce qui provoque la mise en contact d'une part des ressorts 71 avec une pièce 83 solidaire de la pièce 52, ainsi que des ressorts 70 avec une pièce 84 solidaire de la pièce 59, et d'autre part la mise en contact des ressorts 69 avec une pièce 85 solidaire de la pièce 53, et des ressorts 68 avec une pièce 86 solidaire de la pièce 58.

Les pièces précitées 83 et 85 sont électriquement isolées par un élément isolant 87, de même que les pièces 84 et 86 sont électriquement isolées par un élément isolant 88.

Ainsi, on comprend de ce qui précède que le passage du courant de soudage est possible entre les arrivées 21, 22 du courant et les sorties 61, 60 respectivement, ces dernières étant raccordées à la pince de soudage portée par le bras 6.

Le moyen ou ensemble 50 dont le fonctionnement vient d'être décrit et qui permet l'interruption ou l'établissement d'un courant entre deux bras 4-6 du robot comporte avantageusement des circuits incorporés d'air comprimé et de fluide, tels que de l'eau, pour refroidir la pince de soudage. Suivant un exemple de réalisation, ces circuits sont au nombre de cinq pour l'air comprimé et de deux pour l'eau, mais, dans un but de simplification et de clarté, on ne décrira ci-après, en se reportant à la figure 5, qu'un seul circuit de fluide.

L'arrivée de ce fluide est matérialisée par la flèche F 10 et ce fluide circule, comme matérialisé par un trait épais, à l'intérieur de la pièce 53 où plusieurs perçages (non représentés) sont prévus. Puis, le fluide arrive entre deux 90 des nombreux joints d'étanchéité bien visibles sur la figure 5 et montés dans le groupe de pièces 56. Le fluide circule ensuite dans une série de perçages non représentés de la pièce tubulaire 91. L'étanchéité entre les groupes de pièces 56, 64 et la pièce 91 est assurée par une multiplicité de joints repérés en 92 et en 93. Comme on l'a montré en 94, la circulation du fluide continue dans le bras 5 jusqu'entre deux joints d'étanchéité 95 montés dans le groupe de pièces 64. La sortie du fluide se fait en F 11 par des perçages prévus dans la pièce 58 et le fluide est dirigé vers la pince soudage portée par le bras 6.

On a donc réalisé suivant l'invention un robot perfectionné dont les circuits d'alimentation en courant et également en fluide sont incorporés dans certains des bras constituant la partie supérieure du robot.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant les revendications.

## Revendications

1. Robot comprenant un certain nombre de bras (1 à 6) reliés entre eux par des articulations et des circuits aptes à transmettre un courant électrique d'alimentation et au moins un fluide, à un outil tel qu'une pince de soudage portée par le dernier bras (6) du robot, lesdits circuits d'alimentation en courant et en fluide étant incorporés dans au moins certains des bras (3, 4, 5) constituant la partie supérieure du robot, tandis qu'au moins l'une des articulations comporte des moyens (9) pour interrompre ou permettre le passage du courant, d'un bras au suivant, qui comprennent une première pièce annulaire (10) reliée à l'un (3) des bras de façon mobile en translation par rapport à ce bras, et une deuxième pièce annulaire (11) solidaire de l'autre bras (4), caractérisé en ce qu'il comprend:
- des moyens (23) de rappel sollicitant constamment les deux pièces (10, 11) en position écartée l'une de l'autre ;
- des moyens (26, 27, 28) pour plaquer des deux pièces l'une contre l'autre ; et
- des ressorts (24, 25) interposés entre les deux pièces pour assurer le passage du courant entre elles lorsqu'elles sont plaquées l'une contre l'autre, lesdits ressorts étant logés dans une gorge (24a, 25a) ménagée sur une face d'une pièce 11 ou dans une pièce intermédiaire (29, 31) fixée de façon amovible sur cette face, et les spires des ressorts, qui sont sensiblement perpendiculaires aux faces en regard des pièces (10, 11), peuvent être écrasées par une face de l'autre pièce (10) pour ainsi assurer des contacts électriques ponctuels et multiples permettant le passage du courant d'une pièce (10) à l'autre (11).

2. Robot selon la revendication 1, caractérisé en ce que les moyens pour plaquer les deux pièces l'une contre l'autre sont constitués par une chambre annulaire (26) communiquant avec une source d'air comprimé (27) et fermée par un joint à lèvres (28) apte à pousser l'une (10) des deux pièces contre l'autre (11).

3. Robot suivant la revendication 1 ou 2, caractérisé en ce que les deux pièces annulaires (10, 11) se composent chacune de deux demi-pièces (10a, 10b, 11a, 11b) électriquement isolées (12, 17) et dans lesquelles circule un fluide réfrigérant tel que de l'eau (15, 16, 19, 20).

4. Robot comprenant un certain nombre de bras (1 à 6) reliés entre eux par des articulations et des circuits aptes à transmettre un courant électrique d'alimentation et au moins un fluide, à un outil tel qu'une pince de soudage portée par le dernier bras (6) du robot, lesdits circuits d'alimentation en courant et en fluide étant incorporés dans au moins certains des bras (3, 4, 5) constituant la partie supérieure du robot, caractérisé en ce qu'au moins l'une des articulations comporte des moyens (50) pour interrompre ou permettre le passage du courant, qui comprennent :
- au moins une pièce de connexion (51) possédant une première face et une deuxième face pouvant être respectivement appliquées sur des faces correspondantes de deux bras adjacents (4, 6) ;
- des moyens de rappel (76, 80) tendant à éloigner ladite pièce de connexion des deux bras ;
- des moyens (75, 79, 82) pour appliquer la pièce de connexion (51) sur lesdites faces des deux bras, et
- des moyens pour assurer le passage du courant et d'au moins un fluide d'un bras (4) à l'autre (6) lorsque ladite pièce de connexion est plaquée sur les bras, les moyens assurant le passage du courant comprenant des ressorts hélicoïdaux (68 à 71) qui sont logés dans des gorges ménagées sur des faces (66a, 67a) de la pièce de connexion électriquement conductrice (51), et dont les spires sont sensiblement perpendiculaires aux faces de ocntact des deux bras adjacents avec les faces de ladite pièce de connexion.

5. Robot suivant la revendication 4, caractérisé en ce que la pièce de connexion précitée se compose de deux pièces concentriques (66, 67) correspondant aux deux pôles du courant et actionnées chacune par un vérin.

6. Robot suivant la revendication 4 ou 5, caractérisé en ce que la pièce de connexion est agencée à la manière d'un coin entre les deux bras (4, 6).

7. Robot selon la revendication 5 ou 6, caractérisé en ce que chaque pièce concentrique précitée et son vérin associé présentent, en coupe axiale, la forme générale d'un Y renversé dont les deux branches obliques constituent une pièce concentrique et dont la branche verticale constitue l'axe de poussée du vérin.

8. Robot selon l'une des revendications 5 à 7, caractérisé en ce que l'une (66) des pièces concentriques porte une tige (72) solidaire d'un piston (73) monté coulissant dans une chambre (74) reliée à une source de pression (75), ladite tige traversant axialement et à coulissement un deuxième piston (77) solidaire de l'autre pièce concentrique (67) et monté coulissant dans une deuxième chambre (78) raccordée à la source de pression.

## Claims

1. Robot comprising a number of arms (1 to 6) connected therebetween by pivotal connections and circuits adapted to transmit an electrical feed current and at least one fluid to a tool such as a welding tong carried by the last arm (6) of the robot, the said current and fluid supplying circuits being incorporated into at least some of the arms (3, 4, 5) constituting the upper portion of the robot whereas at least one of the pivotal connections comprises means (9) for interrupting or permitting the passage of the current from one arm to the following one, which comprise a first annular part (10) connected to one (3) of the arms in a manner movable in translation with respect to this arm and a second annular part (11) made fast to the other arm (4), characterized in that it comprises :
- return means (23) constantly urging both parts (10, 11) into the position spaced from each other ;
- means (26, 27, 28) for tightly applying both parts to each other ; and
- springs (24, 25) interposed between both parts to ensure the passage of the current between them when they are tightly applied against each other, the said springs being accommodated in a groove (24a, 25a) formed in one face of one part (11) or in one intermediate part (29, 31) fastened in a removable manner on this face and the turns of the springs, which are substantially perpendicular to the confronting faces of the parts (10, 11) may be squeezed by one face of the other part (10) to thus provide electrical and multiple pinpoint contacts permitting the passage of the current from one part (10) to the other one (11).

2. Robot according to claim 1, characterized in that the means for tightly applying both parts upon each other are constituted by an annular chamber (26) communicating with a source of compressed air (27) and closed by a joint with lips (28) adapted to push one (10) of the two parts against the other one (11).

3. Robot according to claim 1 or 2, characterized in that both annular parts (10, 11) consist each one of two electrically insulated half-parts (10a, 10b, 11a, 11b) in which is circulating a refrigerating fluid such as water (15, 16, 19, 20).

4. Robot comprising a number of arms (1 to 6) connected therebetween by pivotal connections and circuits adapted to transmit an electrical feed current and at least one fluid to a tool such as a welding tong carried by the last arm (6) of the robot, the said current and fluid supplying circuits being incorporated into at least some of the arms (3, 4, 5) constituting the upper portion of the robot, characterized in that at least one of the pivotal connections comprises means (50) for interrupting or permitting the passage of the current, which comprise :
- at least one connecting piece (51) having a first face and a second face which may be applied onto the corresponding faces, respectively, of two adjacent arms (4, 6);
- return means (76, 80) tending to move the said connecting piece away from both arms;
- means (75, 79, 82) for applying the connecting piece (51) onto the said faces of both arms, and
- means for providing the passage of the current and of at least one fluid from one arm (4) to the other one (6) when the said connecting piece is tightly applied onto the arms, the means providing the passage of the current comprising helical springs (68 to 71) which are accommodated in grooves formed on the faces (66a, 67a) of the electrically conducting connecting piece (51) and the windings of which are substantially perpendicular to the faces of contact of both adjacent arms with the faces of the said connecting piece.

5. Robot according to claim 4, characterized in that the aforesaid connecting piece consists of two concentric parts (66, 67) corresponding to both poles of the current and each one actuated by a jack.

6. Robot according to claim 4 or 5, characterized in that the connecting piece is arranged in the manner of a wedge between both arms (4, 6).

7. Robot according to claim 5 or 6, characterized in that each aforesaid concentric piece and its associated jack exhibit in axial section the general shape of an inverted Y both oblique legs of which constitute a concentric piece and the vertical leg of which constitutes the thrust axis of the jack.

8. Robot according to one of claims 5 to 7, characterized in that one (66) of the concentric pieces carries a rod (72) made fast to a piston (73) slidably mounted in a chamber (74) connected to a pressure source (75), the said rod extending axially and in sliding relationship through a second piston (77) made fast to the other concentric piece (67) and slidably mounted in a second chamber (78) connected to the pressure source.

## Patentansprüche

1. Roboter mit einer gewissen Anzahl von miteinander durch Gelenke verbundenen Armen (1 bis 6) und Kreislaüfen, die geeignet sind, einen elektrischen Speisungsstrom oder wenigstens ein fliessfähiges Mittel an ein Werkzeug, wie eine von dem letzten Arm (6) des Roboters getragene Schweisszange zu übertragen, wobei die besagten Strom- und Fluidversorgungskreisläufe in wenigstens gewissen, den oberen Teil des Roboters bildenden Armen (3, 4, 5) eingebaut sind, während wenigstens das eine der Gelenke Mittel (9) umfasst, um den Durchfluss des Stromes von einem Arm zu dem nächsten zu unterbrechen oder zu gestatten, welche ein erstes mit einem (3) in Bezug auf diesen Arm in in Translation bewegbarer Weise verbundenes ringförmiges Stück (10) und ein zweites mit dem anderen Arm (4) fest verbundenes ringförmiges Stück (11) umfassen, dadurch gekennzeichnet, dass er umfasst :
- Rückstellmittel (23), die stetig auf die beiden Stücke (10, 11) einwirken, um sie in die voneinander entfernte Stellung zu bringen ;
- Mittel (26, 27, 28), um die beiden Stücke aneinander dicht anzulegen ; und
- zwischen den beiden Stücken gefügte Federn (24, 25), um den Durchfluss des Stromes zwischen diesen zu gewährleisten, wenn sie dicht aneinander angelegt sind, wobei die besagten Federn in einer an einer Fläche eines Stückes (11) oder in einem in abnehmbarer Weise an dieser Fläche befestigten Zwischenstück (29, 31) gebildeten Nut (24a, 25a) untergebracht sind und die Windungen der Federn, die etwa senkrecht zu den gegenüberliegenden Flächen der Stücke (10, 11) stehen, durch eine Fläche des anderen Stückes (10) zusammengedrückt werden können, um somit den Durchfluss des Stromes von einem Stück (10) zum anderen (11) gestattende punktförmige elektrische Mehrkontakte zu bilden.

2. Roboter nach Anspruch 1, dadurch gekennzeichnet, dass die Mittel, um die beiden Stücke dicht aneinander zu drücken, durch eine mit einer Druckluftquelle (27) in Verbindung stehende und durch eine Dichtung mit Lippen (28) verschlossene ringförmige Kammer (26) gebildet werden, welche Dichtung geeignet ist, eines (10) der beiden Stücke gegen das andere (11) zu schieben.

3. Roboter nach Anspruch 1 oder 2, dadurch gekennzeichnet, dass die beiden ringförmigen Stücke (10, 11) jeweils aus zwei elektrisch isolierten (12, 17) Halbstücken (10a, 10b, 11a, 11b) bestehen, in welchen ein Kühlmittel, wie Wasser (15, 16, 19, 20) umläuft.

4. Roboter mit einer gewissen Anzahl von miteinander durch Gelenke verbundenen Armen (1 bis 6) und Kreisläufen, die geeignet sind, einen elektrischen Speisungsstrom und wenigstens ein fliessfähiges Mittel an ein Werkzeug, wie eine von dem letzten Arm (6) des Roboters getragene Schweisszange zu übertragen, wobei die besagten Strom- und Fluidversorgungskreisläufe in wenigstens gewissen, den oberen Teil des Roboters bildenden Armen (3, 4, 5) eingebaut sind, dadurch gekennzeichnet, dass wenigstens eines der Gelenke Mittel (50) aufweist, um den Durchfluss des Stromes zu unterbrechen oder zu gestatten und die umfassen :
- wenigstens ein Anschlußstück (51), dass eine an den entsprechenden Flächen von zwei angrenzenden Armen (4, 6) jeweils anlenkbare erste Fläche und zweite Fläche besitzt ;
- Rückstellmittel (76, 80), die bestrebt sind, das besagte Anschlußstück von den beiden Armen zu entfernen;
- Mittel (75, 79, 82), um das Anschlußstück (51) an den besagten Flächen der beiden Armen anzulegen und
- Mittel, um den Durchfluss des Stromes und wenigstens eines fliessfähigen Mittels von einem Arm (4) zum anderen (6), wenn das besagte Anschlußstück an den Armen dicht angedrückt wird, zu gewährleisten, wobei die den Durchfluss des Stromes gewährleistende Mittel Wendelfedern (68 bis 71) umfassen, die ihn in Flächen (66a, 67a) des elektrisch leitenden Anschlußstückes (51) gebildeten Nuten untergebracht sind und deren Windungen etwa senkrecht zu den Berührungsflächen der beiden angrenzenden Arme mit den Flächen des besagten Anschlußstückes stehen.

5. Roboter nach Anspruch 4, dadurch gekennzeichnet, dass das vorgenannte Anschlußstück aus zwei den beiden Polen des Stromes entsprechenden und jeweils durch einen Kraftzylinder betätigten konzentrischen Stücken (66, 67) besteht.

6. Roboter nach Anspruch 4 oder 5, dadurch gekennzeichnet, dass das Anschlußstück in der Weise eines Keiles zwischen den beiden Armen (4, 6) angeordnet ist.

7. Roboter nach Anspruch 5 oder 6, dadurch gekennzeichnet, dass jedes vorgenannte konzentrische Stück und sein zugeordneter Kraftzylinder im Axialschnitt die allgemeine Gestalt eines Y aufweisen, dessen beide schräge Schenkel ein konzentrisches Stück bilden und dessen senkrechter Schenkel die Schubachse des Kraftzylinders bildet.

8. Roboter nach einem der Ansprüche 5 bis 7, dadurch gekennzeichnet, das eines (66) der konzentrischen Stücke eine mit einem gleitbar in einer mit einer Druckquelle (75) verbundenen Kammer (74) angeordneten Kolben (73) fest verbundene Stange (72) trägt, wobei die besagte Stange einen zweiten, mit dem anderen konzentrischen Stück (67) fest verbundenen und in einer zweiten an die Druckquelle angeschlossenen Kammer (78) gleitbar angeordneten Kolben (77) axial und gleitbar durchsetzt.
